(19) Europäisches Patentamt / European Patent Office / Office européen des brevets

(11) **EP 2 516 349 B1**

(12) **FASCICULE DE BREVET EUROPEEN**

(45) Date de publication et mention
de la délivrance du brevet:
**02.05.2018 Bulletin 2018/18**

(21) Numéro de dépôt: **10813130.1**

(22) Date de dépôt: **21.12.2010**

(51) Int Cl.:
*C04B 35/18* (2006.01)          *C04B 35/19* (2006.01)
*C04B 35/632* (2006.01)        *C04B 35/66* (2006.01)
*B22D 41/02* (2006.01)          *F27D 1/00* (2006.01)

(86) Numéro de dépôt international:
**PCT/IB2010/055994**

(87) Numéro de publication internationale:
**WO 2011/077382 (30.06.2011 Gazette 2011/26)**

(54) **POUDRE POUR PISÉ SEC VITROCÉRAMIQUE**

PULVER FÜR TROCKENES GLASKERAMIK-FEUERFESTMATERIAL

POWDER FOR GLASS-CERAMIC DRY REFRACTORY MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2009 FR 0959585**

(43) Date de publication de la demande:
**31.10.2012 Bulletin 2012/44**

(73) Titulaire: **Saint-Gobain Centre De Recherches
Et D'etudes Europeen
92400 Courbevoie (FR)**

(72) Inventeur: **JORGE, Eric
F-84210 Les Valayans (FR)**

(74) Mandataire: **Nony
11 rue Saint-Georges
75009 Paris (FR)**

(56) Documents cités:
**EP-A1- 0 931 780          EP-A1- 1 810 956
AU-B2- 457 462              FR-A1- 2 528 824
US-A- 4 125 409            US-A1- 2005 255 986
US-A1- 2007 203 013**

**Description**

**Domaine technique**

L'invention se rapporte à une poudre du type pisé sec ou « DVC », en anglais « dry vibratable mix » ou « dry refractory », notamment destinée à la fabrication de revêtement de fours, par exemple de fours à induction, en particulier pour la fusion de métaux.

L'invention se rapporte également à un produit consolidé obtenu à partir d'une poudre selon l'invention.

**Etat de la technique**

Un revêtement d'un four pour la fusion de métaux doit notamment présenter :

- une bonne résistance à la corrosion vis-à-vis du métal en fusion ;
- une bonne résistance à la fissuration ;
- une bonne résistance à l'infiltration par le métal fondu ; et
- une bonne résistance aux chocs thermiques.

A cet effet, on utilise des produits obtenus par traitement thermique de consolidation de poudres du type DVC, telles que décrites par exemple dans EP 1 224 153.

US 2007/203013 décrit un mélange céramique pour utilisation à haute température, comportant entre 83 et 99,5% d'au moins un matériau réfractaire de base dans une fraction inférieure à 8 mm et entre 0,5 et 12% d'au moins une silice granulaire.

US 2005/255986 décrit une composition non façonnée ayant une haute résistance thermique et une résistance à la corrosion améliorée, et une absence de sensibilité à l'infiltration par les scories.

US 4 125 409 décrit un mélange réfractaire à haute teneur en alumine et en chrome comportant majoritairement des matériaux de haute surface spécifique.

FR 2 528 824 décrit un ciment pour damage à sec, spécialement utilisable pour former des revêtements intérieurs dans des auges, des jets de coulée, et l'équivalent pour transporter le fer fondu et le laitier et pour former des parois dans des fours de fusion des métaux.

EP 0 931 780 décrit une composition réfractaire coulable sans ciment pour produire un produit réfractaire dense, comportant 70 à 98% d'un agrégat réfractaire ayant une taille de particules de 10 $\mu$m ou moins, 2 à 30% d'une poudre réfractaire ultrafine ayant une taille de particule de 10 $\mu$m ou moins et 0,01 à 1% d'une poudre réfractaire ultrafine, et un dispersant.

AU 457 462 décrit un mélange pour fabriquer une brique réfractaire consistant essentiellement, en masse, d'environ 85 à 95% d'alumine, 3,99 à 13,99% de silice, 0,01 à 0,5% d'un composé de lithium apte à être oxydé en oxyde de lithium, et 1 à 5% de bentonite.

EP 1 810 956 décrit un produit réfractaire monolithique comportant, en masse, entre 70 et 95% de particules de zircone, de 2 à 12% de particules d'alumine, de 1 à 10% d'un liant et de 2% à 8% d'un verre, le produit ne contenant sensiblement pas de ciment alumineux.

Une poudre du type DVC est une poudre qui, à la différence d'un béton, peut être mise en oeuvre « à sec », c'est-à-dire sans ajout d'eau ou de liant liquide, ou, rarement, avec une quantité très réduite d'eau ou de liant liquide (typiquement inférieure à 3%), à la différence d'un béton. C'est pourquoi, contrairement à un béton, une poudre du type DVC ne comporte classiquement aucun liant apte à prendre en masse par ajout d'eau. Les éventuels enseignements qui pourraient être tirés de l'étude de documents portant sur des bétons ne sont donc pas, *a priori*, transposables à ce type de poudres.

La mise en forme d'une poudre du type DVC résulte classiquement d'une simple compaction à température ambiante, la consolidation résultant d'un traitement thermique de consolidation ultérieur.

Classiquement également, une poudre du type DVC est constituée de particules réfractaires et de particules d'un liant activable à chaud. La température du traitement thermique de consolidation est comprise entre la température de fusion du liant activable à chaud et celle des particules réfractaires. Pendant le traitement thermique de consolidation, le liant activable à chaud peut ainsi passer de l'état solide à un état liquide visqueux permettant une adhésion aux particules réfractaires et une liaison entre ces dernières. Le changement depuis l'état solide vers cet état liquide visqueux est appelé « activation » du liant.

Le liant activable à chaud est également choisi de manière à pouvoir se présenter sous cet état liquide visqueux à une température proche de la température de service du four, en particulier lors de la première montée en température. Cet état liquide visqueux permet ainsi avantageusement de réduire la rigidité du produit fritté, facilitant sa déformation et augmentant ainsi sa capacité d'adaptation à des contraintes thermomécaniques locales. Lors des montées en température suivantes, cet état liquide peut être modifié, et notamment devenir rigide par un enrichissement en particules fines.

L'article « Spinel formation in coreless induction furnace linings », Saikia et Al, Proceedings of the 4th International Symposium on Advances in Refractories for the Metallurgical Industries, p 827-840 (2004) décrit des poudres du type DVC à base d'alumine et/ou de spinelle $MgAl_2O_4$. Les produits frittés obtenus à partir de ces poudres présentent une bonne résistance à la corrosion par les métaux en fusion. Ils présentent cependant une résistance limitée aux chocs thermiques, notamment dans le cas de la fusion d'alliages légers ou d'alliages d'aluminium, à l'origine de chocs thermiques sévères. Or les chocs thermiques créent des fissures à l'origine de phénomènes préjudiciables d'infiltration par les métaux en fusion.

JP 3 183 656 décrit des poudres du type DVC à base de silice cristallisée. Les produits frittés obtenus à partir de ces poudres présentent l'avantage d'une bonne résistance aux chocs thermiques, notamment lors des montées et descentes en température répétitives. Cependant, ces produits frittés présentent une résistance à la corrosion et à l'infiltration par les métaux en fusion limitée. Ils posent également des problèmes d'hygiène lors de leur mise en place, notamment du fait de la présence potentielle de poussières de silice cristallines.

Pour améliorer la résistance aux chocs thermiques, il est connu d'ajouter des particules fines de zircone monoclinique ou des grains de mullite-zircone et/ou d'alumine-zircone. L'accident de dilatation thermique de la zircone crée un réseau de microfissures favorisant l'absorption de l'énergie de propagation des fissures. Dans ce but, il est également connu d'ajouter des particules fines de silice.

Il existe un besoin permanent pour une poudre permettant de fabriquer des produits consolidés, notamment frittés, présentant une bonne résistance aux chocs thermiques et une bonne résistance à l'infiltration par les métaux en fusion, tout en conservant une bonne résistance à la corrosion.

Un but de l'invention est de répondre à ce besoin.

**Résumé de l'invention**

L'invention concerne une poudre comportant plus de 70%, de préférence plus de 80%, plus de 90% de particules vitrocéramiques et/ou réfractaires, une particule de ladite poudre étant classée dans la fraction appelée "matrice" ou dans la fraction appelée "granulat" selon qu'elle présente une taille inférieure ou égale à 100 µm, ou supérieure à 100 µm, respectivement,

le granulat représentant plus de 60% de la poudre et comportant :

- plus de 40% de particules en un matériau vitrocéramique présentant un taux de cristallisation supérieur à 50% et une valeur de dilatation thermique mesurée à 700°C inférieur à 0,3%, dites « grains vitrocéramiques » ;
- moins de 35% de particules en un matériau réfractaire différent d'un matériau vitrocéramique, dites "grains réfractaires", la quantité de grains réfractaires étant supérieure à 10% si le granulat comporte plus de 40% de grains vitrocéramiques présentant une valeur de dilatation thermique mesurée à 700°C inférieure ou égale à 0,15% ;

la matrice représentant plus de 10% de la poudre et comportant :

- moins de 30% de particules en un matériau réfractaire différent d'un matériau vitrocéramique, dites "particules fines réfractaires", la quantité de particules fines réfractaires étant supérieure à 5% et, de préférence, inférieure à 25%, si la quantité de grains vitrocéramiques présentant un taux de cristallisation inférieur à 75% est supérieure à 5% ;
- entre 0,1% et 18% de particules d'un liant activable à chaud, en particulier un liant inorganique ou au moins une résine, dites "particules fines de liant activable à chaud" ;

tous les pourcentages étant en masse par rapport à la masse de la poudre.

Comme on le verra plus en détail dans la suite de la description, les inventeurs ont découvert qu'une poudre selon l'invention conduit à un produit résistant particulièrement bien aux chocs thermiques et à l'infiltration, tout en conservant une bonne résistance à la corrosion.

Une poudre selon l'invention peut encore comporter une ou plusieurs des caractéristiques optionnelles suivantes :

- De préférence, la matrice représente plus de 15%, de préférence plus de 20% et/ou moins de 40%, de préférence moins de 35% de la masse de la poudre, le complément étant, par définition, constitué par le granulat.
- La poudre présente les caractéristiques suivantes :

  - la taille maximale des particules est inférieure à 5 mm, et
  - la quantité de particules de taille supérieure à 300 µm est supérieure à 50% et inférieure à 70%, et

- la quantité de matrice est supérieure à 15%, de préférence supérieure à 20%, et inférieure à 40%, et
- la quantité de particules de taille inférieure à 75 $\mu$m est supérieure à 10% et inférieure à 35%.

- Le matériau des grains vitrocéramiques est identique ou différent de celui des particules fines vitrocéramiques.
- Toutes les particules vitrocéramiques sont constituées en le même matériau.
- Le matériau des grains réfractaires est identique ou différent de celui des particules fines réfractaires.
- La poudre comporte de préférence plus de 1%, plus de 2%, plus de 3%, plus de 4%, plus de 5%, et/ou moins de 15%, moins de 12%, moins de 10 %, voire moins de 8%, voire moins de 6% de liant activable à chaud.
- De préférence, le liant activable à chaud présente une température de fusion supérieure à 5°C, de préférence supérieure à 15°C, de préférence supérieure à 20°C, voire supérieure à 30°C, supérieure à 50°C, supérieure à 70°C, supérieure à 80°C, supérieure à 150°C, et/ou inférieure à 1500°C, inférieure à 1300°C, inférieure à 1200°C.
- De préférence, le liant activable à chaud présente une température de fusion comprise entre 150°C et 1200°C.
- De préférence, le liant activable à chaud n'est pas un métal.
- Le liant activable à chaud est sélectionné dans le groupe formé par l'oxyde de bore, l'acide borique, les borates, la cryolithe, les sels de fluorure, les composés de silicate, les composés de phosphate, les feldspaths, les chlorures de magnésium, la colémanite, l'argile, le kaolin, la silice amorphe, en particulier la fumée de silice, les résines, les frittes céramiques, et leurs mélanges. La résine peut être en particulier choisie parmi les résines phénoliques, les résines furaniques, les résines acryliques, les résines de polyester, les résines époxydes, les résines silicones, les résines siloxanes, les résines alkydes, les résines polyvinyliques, et leurs mélanges. Dans un mode de réalisation particulier, la résine est choisie parmi les produits particulaires transformables en un polymère lors du traitement thermique de consolidation.
- De préférence, le liant activable à chaud est sélectionné dans le groupe formé par les borates de sodium, les borates de potassium, les borates de calcium, l'acide borique, l'oxyde de bore, l'argile, les sels de fluorure, et leurs mélanges. De préférence, le liant activable à chaud est sélectionné dans le groupe formé par l'acide borique, l'oxyde de bore, l'argile, les sels de fluorure, et leurs mélanges.
- De préférence, le liant activable à chaud est inorganique.
- La poudre comporte plus de 2%, plus de 3%, voire plus de 4% et/ou moins de 10%, moins de 8%, voire moins de 7% d'argile.
- La poudre comporte plus de 0,5%, plus de 1%, et/ou moins de 5%, moins de 4%, voire moins de 3% d'acide borique.
- La poudre comporte plus de 0,1%, plus de 0,5% et/ou moins de 5%, moins de 3%, voire moins de 2% de fluoroborate de potassium.
- La poudre contient un agent permettant de réduire, voire de supprimer, les poussières lors de la mise en place de la poudre. Cet « agent anti-poussières » peut être sélectionné dans le groupe formé par les huiles, en particulier les huiles minérales, le kérosène, les polymères organiques et leurs mélanges. De préférence cet agent est du kérosène. De préférence, la quantité d'agent anti-poussières est comprise entre 0,1% et 1%.
- La poudre contient au moins un agent permettant de réduire la mouillabilité aux métaux en fusion de ladite poudre et/ou du produit consolidé obtenu à partir de ladite poudre. De préférence, cet « agent anti-mouillant » est choisi parmi le carbure de silicium, le sulfate de baryum, les SiAlON, les nitrures. De préférence, cet agent est choisi parmi le carbure de silicium et le sulfate de baryum. De préférence encore, l'agent anti-mouillant est le sulfate de baryum. De préférence, l'agent anti-mouillant est introduit sous la forme de particules présentant une taille inférieure ou égale à 100 $\mu$m. De préférence, la quantité d'agent anti-mouillant est comprise entre 5 et 15%, de préférence entre 5 et 10%.
- Les particules réfractaires et les particules du liant activable à chaud représentent ensemble plus de 81 %, plus de 85 %, plus de 90 %, plus de 93 %, voire plus de 95 %, voire plus de 98 % de la masse de la poudre.
- La poudre est constituée pour plus de 95%, voire plus de 98%, voire sensiblement 100%, de grains réfractaires ou vitrocéramiques, de particules fines réfractaires ou vitrocéramiques, de particules de liant activable à chaud, de particules d'agent anti-poussières et de particules d'agent anti-mouillant, le complément éventuel à 100% étant constitué d'impuretés, par exemple de fer provenant d'une étape de broyage.
- Les impuretés représentent moins de 3 %, moins de 2 %, voire moins de 1 %.
- La poudre ne contient pas de liant hydraulique ou de liant organique excepté, éventuellement, une résine. Dans un premier mode réalisation, la poudre ne contient ni liant hydraulique, ni liant organique excepté, éventuellement, une résine. Dans un deuxième mode de réalisation, la poudre ne contient ni liant hydraulique, ni liant organique.

Le granulat d'une poudre selon l'invention peut encore comporter une ou plusieurs des caractéristiques optionnelles suivantes :

- La taille maximale des particules du granulat, dites "grains", est inférieure ou égale à 10 mm, de préférence inférieure ou égale à 8 mm, de préférence inférieure ou égale à 6 mm, voire inférieure ou égale à 4 mm.

- La quantité de grains de taille supérieure à 300 $\mu$m est supérieure à 50% et/ou inférieure à 70%.
- La quantité de grains vitrocéramiques est supérieure à 45%, supérieure à 50%, voire supérieure à 55% et/ou inférieure à 80%, voire inférieure à 70%, ou inférieure à 65%.
- Lesdits grains vitrocéramiques présentent une taille maximale de préférence inférieure ou égale à 10 mm, de préférence inférieure ou égale à 8 mm, de préférence inférieure ou égale à 6 mm, voire inférieure ou égale à 4 mm.
- La quantité de grains vitrocéramiques présentant une taille supérieure à 1 mm, sur la base de la quantité de grains vitrocéramiques, est supérieure à 30%, de préférence supérieure à 40%, de préférence supérieure à 50%, de préférence supérieure à 60%, voire supérieure à 70%.
- Le granulat comporte plus de 40% de grains vitrocéramiques présentant un taux de cristallisation supérieur à 60%, supérieur à 70%, voire supérieur à 75%, ou même supérieur à 80% ou supérieur à 85%.
- Plus de 90%, de préférence plus de 95%, de préférence sensiblement 100% des grains vitrocéramiques, en pourcentage en masse sur la base des grains vitrocéramiques, présentent un taux de cristallisation supérieur à 75%, de préférence supérieur à 85%, de préférence supérieur à 90%, voire supérieur à 95%.
- Le matériau vitrocéramique des grains vitrocéramiques présente des cristaux de virgilite et/ou de spodumène et/ou d'indialite et/ou de cordiérite et/ou de beta-quartz et/ou de mullite et/ou de celsian et/ou d'hexa-celsian, de préférence des cristaux de virgilite et/ou de cordiérite.
- Le matériau vitrocéramique des grains vitrocéramiques présente une température de transition vitreuse supérieure à 700°C, voire supérieure 750°C.
- Le granulat comporte plus de 5%, de préférence plus de 10%, et/ou, de préférence, moins de 30% de grains réfractaires.
- Lesdits grains réfractaires présentent une taille maximale de préférence inférieure à 5 mm, de préférence inférieure à 4 mm, de préférence inférieure à 2 mm, de préférence inférieure à 1 mm.
- Les grains réfractaires sont en un matériau choisi dans le groupe formé par l'alumine, la magnésie, l'oxyde de chrome, la silice, la bauxite, la mullite, la zircone, la zircone partiellement stabilisée, la zircone stabilisée, la mullite-zircone, l'alumine-zircone, le spinelle magnésie-alumine, le zircon, la cordiérite, le titanate d'aluminium, les chamottes argileuses contenant entre 30 et 50% d'alumine, de préférence entre 35% et 45% d'alumine, la wollastonite, les matériaux alumine-zircone-silice (ou « AZS »), les matériaux alumine-zircone-silice-oxyde de chrome (ou « AZS-Cr »), la bauxite, les zircones renforcées par de l'alumine, les matériaux alumine-oxyde de titane-zircone, et leurs mélanges. De préférence, les grains réfractaires sont en un matériau choisi dans le groupe formé par l'alumine, la mullite, les chamottes argileuses contenant entre 30 et 50% d'alumine, de préférence entre 35% et 45% d'alumine, la bauxite et leurs mélanges. De préférence, les grains réfractaires sont en un matériau choisi dans le groupe formé de l'alumine, la mullite, et leurs mélanges.
- Le matériau alumine - oxyde de titane - zircone peut notamment présenter la composition chimique suivante, en pourcentages sur la base des oxydes dudit matériau :

    - 10% $\leq$ Al$_2$O$_3$ $\leq$ 55%,
    - 35% $\leq$ TiO$_2$ $\leq$ 80%,
    - 1 % $\leq$ MgO+Cr$_2$O$_3$ $\leq$ 10%,
    - 8% $\leq$ ZrO$_2$ $\leq$ 20%,
    - SiO$_2$ $\leq$ 8%.

- Le granulat comporte moins de 20%, moins de 10%, voire moins de 5%, sur la base de la quantité totale de liant activable à chaud, voire sensiblement pas de particules en ledit liant activable à chaud, dites « grains de liant ».

La matrice d'une poudre selon l'invention peut encore comporter une ou plusieurs des caractéristiques optionnelles suivantes :

- La quantité de particules fines de taille inférieure à 75 $\mu$m est comprise entre 10% et 35%.
- La matrice contient des particules fines réfractaires en un matériau réfractaire choisi dans le groupe formé par l'alumine, la magnésie, l'oxyde de chrome, la silice, la bauxite, la mullite, la zircone, la zircone partiellement stabilisée, la zircone stabilisée, la mullite-zircone, l'alumine-zircone, le spinelle magnésie-alumine, le zircon, la cordiérite, le titanate d'aluminium, les chamottes argileuses contenant entre 30% et 50% d'alumine, de préférence entre 35% et 45% d'alumine, la wollastonite, les matériaux alumine-zircone-silice (ou « AZS »), les matériaux alumine-zircone-silice-oxyde de chrome (ou « AZS-Cr »), la bauxite, les zircones renforcées par de l'alumine, les matériaux alumine-oxyde de titane-zircone, et leurs mélanges. De préférence, ledit matériau réfractaire est choisi dans le groupe formé par l'alumine, la mullite, les chamottes argileuses contenant entre 30% et 50% d'alumine, de préférence entre 35% et 45% d'alumine, la bauxite, et leurs mélanges. De préférence encore, ledit matériau réfractaire est choisi dans le groupe formé de l'alumine, la mullite, et leurs mélanges.

- Le matériau alumine - oxyde de titane - zircone peut notamment présenter la composition chimique suivante, en pourcentages sur la base des oxydes dudit matériau :

    - $10\% \leq Al_2O_3 \leq 55\%$,
    - $35\% \leq TiO_2 \leq 80\%$,
    - $1\% \leq MgO+Cr_2O_3 \leq 10\%$,
    - $8\% \leq ZrO_2 \leq 20\%$,
    - $SiO_2 \leq 8\%$.

- La quantité de particules fines réfractaires est supérieure à 10%, de préférence supérieure à 15%, et/ou inférieure à 27%, inférieure à 25%.
- La matrice comporte moins de 20%, moins de 10%, voire moins de 5%, voire sensiblement pas de particules en un matériau vitrocéramique présentant un taux de cristallisation supérieur à 50% et une valeur de dilatation thermique mesurée à 700°C inférieure à 0,3%, dites « particules fines vitrocéramiques ».
- La quantité de particules fines réfractaires est supérieure à 5%, de préférence supérieure à 10%, de préférence supérieure à 15%, voire supérieure à 20% et, de préférence, inférieure à 25%, et la quantité de grains vitrocéramiques ne comportant pas des cristaux de virgilite et/ou de spodumène et/ou d'indialite et/ou de cordiérite et/ou de béta-quartz et/ou de mullite et/ou de celsian et/ou d'hexa-celsian est supérieure à 5%.
- La quantité de particules fines de liant activable à chaud est de préférence supérieure à 1%, supérieure à 3%, supérieure à 5%, et/ou de préférence inférieure à 15%, de préférence inférieure à 10%, voire inférieure à 8% ou même inférieure à 6%.

L'invention concerne aussi un produit obtenu par traitement thermique de consolidation d'une poudre selon l'invention, en particulier sous la forme d'un bloc ou d'un revêtement.

Le produit comporte de préférence plus de 1%, plus de 2%, plus de 3%, plus de 4%, plus de 5%, et/ou moins de 15%, moins de 12%, moins de 10 %, voire moins de 8%, voire moins de 6% de liant activable à chaud et/ou de produit de transformation dudit liant activable à chaud résultant dudit traitement thermique de consolidation. Le procédé de fabrication d'un produit consolidé comporte les étapes successives suivantes :

a) préparation d'une charge de départ à partir d'une poudre selon l'invention ;

   (1) la charge de départ comportant une poudre selon l'invention et la phase liquide dans ladite charge de départ représentant moins de 3%, de préférence moins de 2%, de préférence encore sensiblement 0% de la masse de la charge de départ ; ou
   (2) la charge de départ étant constituée d'un mélange comportant de l'eau et/ou un liant temporaire, tel que décrit ci-dessous ;

b) mise en forme de ladite charge de départ, notamment par pressage, damage ou vibration ;
c) traitement thermique de consolidation de la charge de départ mise en forme à une température supérieure à la température de fusion du liant activable à chaud et inférieure à la température de fusion des particules réfractaires et vitrocéramiques.

Ce procédé peut être mis en oeuvre pour la fabrication de la paroi latérale et du fond d'un creuset d'un four à induction. La paroi latérale et le fond d'un tel creuset constituent ensemble le « revêtement » du four.

Dans le cas (1), l'eau, voire la phase liquide dans ladite charge de départ, représente de préférence moins de 2% de la masse de la charge de départ. De préférence encore, et en particulier pour un revêtement de four à induction à creuset, la charge de départ ne comporte pas d'eau, ni de liant temporaire.

Le fond du creuset, ou « sole », est réalisé en versant dans l'enceinte du four la charge de départ, de préférence constituée d'une poudre selon l'invention. La couche ainsi constituée est alors par exemple damée ou vibrée. Après une opération de mise à niveau qui permet également d'éliminer la couche supérieure de la sole plus faiblement densifiée, un moule est provisoirement disposé sur la couche ainsi obtenue.

Pour réaliser la paroi latérale du creuset, on poursuit alors le versement de la charge de départ entre l'enceinte du four et le moule disposé dans ladite enceinte, de préférence jusqu'à ce que la charge de départ ceinture le moule sur toute sa hauteur. Ladite enceinte peut notamment être constituée d'une couche de matériaux d'isolation.

De préférence, la charge de départ est compactée par vibration. La compaction peut être réalisée au fur et à mesure du versement de la charge de départ.

Une montée en température permet ensuite une activation du liant activable à chaud, c'est-à-dire permet aux particules de liant activable à chaud de fondre sous une forme visqueuse, et ainsi d'assurer la cohésion des particules réfractaires et vitrocéramiques.

A l'étape c), le traitement thermique de consolidation est de préférence effectué à une température supérieure à température de service $T_{service}$. La durée du palier à la température maximale atteinte lors du traitement thermique de consolidation est de préférence supérieure à 30 minutes, de préférence supérieure à 1 heure et/ou inférieure à 10 heures, de préférence inférieure à 3 heures.

Le traitement thermique de consolidation peut être un frittage.

Après refroidissement, le liant activable à chaud forme une phase liante entre les particules réfractaires et vitrocéramiques. On obtient ainsi un produit dit « consolidé ». Typiquement, la porosité ouverte d'un tel produit consolidé est comprise entre 10% et 30%.

Si la température d'activation n'a pas été atteinte sur toute l'épaisseur de la paroi latérale et du fond du creuset, une partie du creuset, en particulier à proximité de l'inducteur du four, peut ne pas être consolidée.

Après l'étape de traitement thermique de consolidation, le moule est retiré ou éliminé et le creuset est prêt à servir à la fusion de métal.

Ce procédé de fabrication d'un produit consolidé peut être également mis en oeuvre pour la fabrication de blocs unitaires destinés à être assemblés à d'autres blocs. Il est alors préférable, suivant l'option (2), d'ajouter à la poudre un liant temporaire et/ou de l'eau. On obtient alors un mélange pouvant être versé dans un moule et permettant, après l'étape b), l'obtention d'une préforme présentant, à température ambiante, une tenue, dite « à froid ».

L'invention porte aussi sur un tel mélange.

De préférence, la quantité de liant temporaire dans ce mélange est supérieure à 0,5% et/ou inférieure à 6%, et la quantité d'eau est supérieure à 2% et/ou inférieure à 6%, voire inférieure à 5%, en pourcentages en masse par rapport à la masse de la poudre avant addition du liant temporaire et de l'eau.

Les liants temporaires classiquement utilisés pour la fabrication de blocs céramiques frittés peuvent être mis en oeuvre, par exemple la dextrine, un lignosulfonate de calcium, la CMC, ou un PEG. Il est mentionné aussi l'utilisation d'un produit consolidé selon l'invention dans une application dans laquelle au moins une partie dudit produit consolidé est soumise à une température de service $T_{service}$ inférieure à la température maximale de traitement thermique de consolidation.

L'invention concerne également un four de fusion de métaux comportant au moins une région constituée en un produit consolidé selon l'invention, en particulier une région destinée à être en contact avec un métal en fusion.

Le four peut en particulier être un four de fusion d'aluminium, d'alliages d'aluminium, comme par exemple l'alliage de référence 42200 selon la norme NF EN 1706, d'alliages de magnésium, d'alliages de zinc ou d'alliages de cuivre.

Bien entendu, la nature des grains réfractaires est déterminée de manière que la température de fusion desdits grains soit supérieure à la température à laquelle il est prévu de soumettre ladite région.

De préférence, le matériau vitrocéramique des grains vitrocéramiques présente une température de transition vitreuse Tg supérieure à la température à laquelle il est prévu de soumettre ladite région (température de service $T_{service}$), minorée de 50°C, c'est-à-dire telle que Tg > $T_{service}$ - 50°C. Ponctuellement, une minoration de 100°C peut être envisagée, c'est-à-dire Tg > $T_{service}$ - 100°C. Il est mentionné aussi un procédé de fabrication d'un four, en particulier d'un four de fusion de métaux, dans lequel on assemble au moins un bloc en un produit selon l'invention ou dans lequel on fabrique un creuset comportant un produit selon l'invention, en particulier dans une région destinée à entrer en contact avec du métal en fusion.

De préférence, le matériau vitrocéramique des grains vitrocéramiques dudit produit présente une température de transition vitreuse Tg supérieure à la température à laquelle il est prévu d'utiliser ledit produit minorée de 50°C.

**Définitions**

- Par « poudre », on entend un mélange particulaire sec.
- On appelle « particules » les éléments solides constitutifs d'une poudre. Les particules de la matrice sont appelées « particules fines » et les particules du granulat sont appelées « grains ».
- La « taille » d'une particule est donnée classiquement par une caractérisation de distribution granulométrique. Un granulomètre laser permet par exemple la mesure des tailles inférieures ou égale à 5 mm.
- Les percentiles ou « centiles » 10 ($D_{10}$), 50 ($D_{50}$), 90 ($D_{90}$) et 99,5 ($D_{99,5}$) d'une poudre sont les tailles de particules correspondant aux pourcentages, en masse, de 10 %, 50 %, 90 % et 99,5 % respectivement, sur la courbe de distribution granulométrique cumulée des particules de la poudre, les tailles de particules étant classées par ordre croissant. Par exemple, 10 %, en masse, des particules de la poudre ont une taille inférieure à $D_{10}$ et 90 % des particules en masse ont une taille supérieure à $D_{10}$. Les percentiles peuvent être déterminés à l'aide d'une distribution granulométrique réalisée à l'aide d'un granulomètre laser.

- On appelle « taille maximale » le percentile 99,5 ($D_{99,5}$) de ladite poudre.
- On appelle « taille médiane » le percentile $D_{50}$, c'est-à-dire la taille divisant les particules en première et deuxième populations égales en masse, ces première et deuxième populations ne comportant que des particules présentant une taille supérieure, ou inférieure respectivement, à la taille médiane.
- Par « matériau vitrocéramique », on entend un composé microcristallin obtenu par cristallisation contrôlée d'un verre précurseur. Les matériaux vitrocéramiques sont composés de très fines cristallisations (microcristallisations), de taille moyenne inférieure à 1$\mu$m, baignant dans une phase vitreuse résiduelle. La quantité de phase vitreuse ne limite pas l'invention et peut être présente en une très faible quantité.

  La cristallisation contrôlée d'un verre précurseur (à l'état solide), s'effectue le plus souvent lors d'une étape suivant, immédiatement ou non, l'étape d'obtention dudit verre précurseur. La cristallisation contrôlée est appelée habituellement "traitement thermique de cristallisation" ou "traitement thermique de vitrocéramisation".

  Les produits fabriqués par fusion-refroidissement qui, au cours de leur fabrication, ne transitent pas par une étape dans laquelle ils sont à l'état de verre ne sont donc pas des matériaux vitrocéramiques. Le corindon fondu, l'alumine fondue, les spinelles fondus, la magnésie fondue, la mullite fondue, la mullite-zircone fondue, le titanate d'aluminium fondu, éventuellement dopé, et les nitrures fondus ne sont pas, en particulier, des matériaux vitrocéramiques.

  Lorsqu'une particule d'une poudre selon l'invention est en un matériau à la fois vitrocéramique et réfractaire, elle est considérée comme une « particule vitrocéramique », c'est-à-dire, selon sa taille, comme un « grain vitrocéramique » ou comme une « particule fine vitrocéramique ».
- Par « température de transition vitreuse » d'un matériau vitrocéramique, on entend le milieu de l'intervalle de température dans lequel ledit matériau vitrocéramique devient progressivement plus visqueux et passe de l'état liquide à l'état solide. La température de transition vitreuse des matériaux vitrocéramiques peut être déterminée par analyse thermique différentielle (ATD).
- Par « valeur de dilatation thermique » mesurée à 700°C, on entend le rapport $100.(L_{700°C} - L_0) / L_0$, où $L_{700°C}$ et $L_0$ désignent la longueur d'un échantillon du produit à 700°C et à température ambiante respectivement. Les valeurs de dilatation thermiques peuvent être notamment mesurées comme décrit dans les exemples.
- Par « taux de cristallisation » d'un matériau vitrocéramique, on entend le pourcentage massique de phases cristallisées contenues dans ledit matériau.
- Par « impuretés», on entend les constituants inévitables, introduits involontairement et nécessairement avec les matières premières ou résultant de réactions avec ces constituants. Les impuretés ne sont pas des constituants nécessaires, mais seulement tolérés. De préférence la quantité des impuretés est inférieure à 2%, inférieure à 1%, inférieure à 0,5%, voire sensiblement nulle.
- Par « matériau réfractaire », on entend un matériau présentant une température de fusion supérieure à 1500°C. Cette définition est communément employée par l'homme du métier et citée dans « Matériaux réfractaires et céramiques techniques (éléments de céramurgie et de technologie) », G. Aliprandi, éditions Septima Paris, 1979. Cet ouvrage donne également en pages 297 à 301 des exemples de matériaux réfractaires, notamment oxydes, carbures et nitrures.
- Par « liant activable à chaud », on entend un constituant qui, sous l'effet d'une augmentation de la température, va se liquéfier sous une forme visqueuse adaptée pour agglomérer les particules d'une poudre réfractaire dans laquelle il est mélangé. A titre d'exemples, l'acide borique, le tétrafluoroborate de potassium et la cryolithe fondent à des températures de fusion comprises entre 150 et 300°C, d'environ 530°C et de 1010°C, respectivement, en donnant des phases visqueuses capables d'agglomérer les particules d'une poudre selon l'invention, c'est-à-dire capables de conduire à un produit structuré (autoportant).
- Par « borate », on entend un composé d'oxoanions à base de bore et d'éléments électropositifs. L'oxoanion à base de bore peut être l'oxoanion borate $BO_2^-$, l'oxoanion diborate $B_2O_5^{4-}$, l'oxoanion triborate $B_3O_5^-$, l'oxoanion tétraborate $B_4O_7^{2-}$. Le tétraborate de sodium $Na_2B_4O_7$, le triborate de lithium $LiB_3O_5$, le diborate de magnésium $Mg_2B_2O_5$ sont des exemples de borates. Les borates peuvent également être hydratés, comme par exemple le borax $Na_2B_4O_7.10H_2O$.
- Par « temporaire », on entend « éliminé du produit pendant le traitement thermique de consolidation ».
- Sauf indication contraire, tous les pourcentages sont exprimés en masse par rapport à la masse de la poudre.
- Classiquement, les caractéristiques relatives à un état de la matière (température de fusion, viscosité, ...) sont fournies à une pression de 1 bar, sauf indication contraire.

**Description détaillée**

De préférence, une poudre selon l'invention est formée par le seul mélange de particules réfractaires, de particules vitrocéramiques et de particules de liant activable à chaud.

Toutes les particules réfractaires utilisées selon la technique antérieure peuvent être envisagées, pour la matrice comme pour le granulat.

Les inventeurs ont découvert que l'ajout des particules vitrocéramiques améliore remarquablement les propriétés du produit consolidé obtenu à partir de la poudre, pourvu que :

- le granulat contienne une quantité élevée de particules vitrocéramiques ;
- le taux de cristallisation des particules vitrocéramiques dudit granulat soit élevé ;
- la valeur de dilatation thermique des particules vitrocéramiques dudit granulat soit faible à une température proche de la température de service (classiquement d'environ 700°C).

Les particules vitrocéramiques sont de préférence choisies de façon à ce que la température de transition vitreuse d'une particule soit au plus inférieure de 50°C à la température maximale à laquelle cette particule est soumise en service, quelle que soit la particule considérée. Autrement dit, cette dernière température ne doit pas dépasser de plus de 50°C ladite température de transition vitreuse.

De préférence, la température de transition vitreuse d'une particule vitrocéramique, quelle que soit la particule considérée, est supérieure ou égale à la température à laquelle elle est soumise en service.

Il est cependant nécessaire que, dans le granulat, la quantité de grains en un matériau réfractaire différent d'un matériau vitrocéramique soit inférieure à 35%.

Temporairement, notamment lors de la première montée en température, la température de service peut dépasser la température de transition vitreuse maximale des particules. De préférence, ce dépassement reste cependant limité à moins de 100°C.

Un taux de cristallisation supérieur à 50% s'est avéré nécessaire pour que les performances au contact du métal en fusion et d'affaissement sous charge en service soient adaptées à l'utilisation envisagée.

Un taux de cristallisation supérieur à 75% permet d'obtenir d'excellentes performances, que la matrice comporte des particules réfractaires ou non.

Si le taux de cristallisation est compris entre 50% et 75%, les performances sont moindres. Cependant, les inventeurs ont découvert que la présence, dans la matrice, d'une quantité de particules fines réfractaires comprise entre 5% et 25% permet de maintenir une résistance à la corrosion et à l'infiltration par les métaux en fusion acceptable pour les applications visées.

La vitrocéramique doit être céramisée dans les particules vitrocéramiques de la poudre. En effet une cristallisation après mise en forme de la poudre, par exemple lors du traitement thermique de consolidation ou lors de la première mise en marche du four, conduirait à un retrait inacceptable.

Par ailleurs, si la valeur de dilatation thermique des particules vitrocéramiques dudit granulat doit être faible, les inventeurs ont cependant découvert qu'elle ne doit pas être la plus faible possible. En particulier, ils ont découvert que les performances se dégradent lorsque cette valeur de dilatation thermique est inférieure ou égale à 0,1%. Cette dégradation des performances peut cependant être au moins en partie compensée par la présence, dans le granulat, de grains réfractaires, de préférence en une quantité comprise entre 10% et 35%.

En revanche, si la valeur de dilatation thermique est supérieure à 0,1%, la présence de grains réfractaires dans le granulat est optionnelle. De préférence leur quantité est alors inférieure à 30%.

Le choix du liant activable à chaud doit s'effectuer notamment en fonction de la température de service. Plus précisément, ce liant doit être activable sous la température de service. A titre d'exemple, il n'est pas envisagé d'utiliser de la cryolithe comme liant activable à chaud pour une application dans laquelle la température de service serait inférieure à 950°C.

Le liant activable à chaud doit être également choisi de manière à présenter une température de fusion inférieure à celle des particules vitrocéramiques et/ou réfractaires. Pendant le traitement thermique de consolidation, le liant activable à chaud peut ainsi passer de l'état solide à un état liquide visqueux permettant une adhésion aux particules vitrocéramiques et/ou réfractaires et une liaison entre ces dernières.

Une poudre selon l'invention peut être fabriquée par mélange de matières premières présentant des granulométries, cristallisations et compositions adaptées.

Tous les moyens connus pour compacter une poudre selon l'invention sont possibles, notamment le pressage, le damage, le coulage ou la vibration.

De préférence, la distribution granulométrique d'une poudre selon l'invention est adaptée pour favoriser sa compaction. Des modèles de compaction comme le modèle de Fuller-Bolomey ou le modèle d'Andréasen peuvent être utilisés pour déterminer la distribution granulométrique la plus adaptée.

## Exemples

Les poudres des différents exemples ont été fabriquées de la manière suivante.

Préparation des particules vitrocéramiques

Une charge de départ adaptée en fonction de l'analyse chimique des particules vitrocéramiques de la poudre désirée est fondue dans un four à arc. Le bain de matière en fusion, d'environ 15 kg, est coulé dans un réservoir d'eau de 200 litres, permettant une trempe rapide et évitant la cristallisation.

Le verre précurseur ainsi obtenu est un mélange de particules amorphes de taille inférieure à 20 mm. L'état amorphe des particules est vérifié par diffraction X. Les particules sont ensuite séchées à 110°C pendant 48 heures, puis soumises à un traitement thermique de vitrocéramisation (ou « de cristallisation »). Ce traitement thermique comporte principalement un palier de nucléation (ou « germination ») et un palier de croissance cristalline, définis en fonction de la température de transition vitreuse Tg et du pic de cristallisation déterminés par analyse thermique différentielle (ATD).

Les traitements thermiques de vitrocéramisation sont les suivants :

- particules vitrocéramiques des exemples 2 et 3 :

  - de 20°C à 750°C : montée à 300°C/h
  - palier de 1 heure à 750°C
  - de 750°C à 950°C : montée à 300°C/h
  - palier de 1 heure à 950°C
  - descente à 300°C/h jusqu'à 20°C.

- particules vitrocéramiques de l'exemple 4 :

  - de 20°C à 750°C : montée à 300°C/h
  - palier de 1 heure à 750°C
  - de 750°C à 950°C : montée à 300°C/h
  - palier de 10 heures à 950°C
  - descente à 300°C/h jusqu'à 20°C.

- particules vitrocéramiques des exemples 5, 6 et 7 :

  - de 20°C à 780°C : montée à 300°C/h
  - palier de 4 heures à 780°C
  - de 780°C à 1020°C : montée à 300°C/h
  - palier de 10 heures à 1020°C
  - descente à 300°C/h jusqu'à 20°C.

- particules vitrocéramiques de l'exemple 8 :

  - de 20°C à 790°C : montée à 300°C/h
  - palier de 4 heures à 790°C
  - de 790°C à 1200°C : montée à 300°C/h
  - palier de 2 heures à 1200°C
  - descente à 300°C/h jusqu'à 20°C.

Après traitement thermique de vitrocéramisation, les particules sont broyées au concasseur à mâchoires et tamisées de manière à obtenir les fractions granulométriques souhaitées.

Les analyses des particules vitrocéramiques utilisées sont données dans le tableau 1 suivant (pourcentages massiques). Le complément à 100% est constitué d'impuretés.

La valeur de dilatation thermique mesurée à 700°C d'un matériau vitrocéramique est réalisée sur un cylindre monolithique dudit matériau usiné à partir d'une des particules amorphes de taille inférieure à 20 mm et vitrocéramisée. Ce cylindre présente un diamètre de 12 mm et une hauteur comprise 10 à 15 mm.

La hauteur du cylindre est mesurée à température ambiante au moyen d'un dilatomètre vertical Setaram Setsys évolution TMA 1750. La mesure est réalisée au moyen d'un mono-palpeur hémisphérique avec équipage en silice. On mesure $L_o$ la longueur à température ambiante, et $L_{700°C}$, la longueur à 700°C. La valeur de dilatation thermique mesurée à 700°C est égale au rapport $100.(L_{700°C} - L_0)/L_0$.

La température de transition vitreuse Tg est mesurée par ATD.

Tableau 1

| Particules vitrocéramiques | Ex. 2, 3 | Ex. 4 | Ex. 5, 6, 7 | Ex. 8 |
|---|---|---|---|---|
| $SiO_2$ | 65,2 | 65,2 | 65,8 | 56,3 |
| $Al_2O_3$ | 21,3 | 21,3 | 22,0 | 20,0 |
| $LiO_2$ | 5,0 | 5,0 | 3,5 | - |
| MgO | 0,7 | 0,7 | 0,1 | 14,6 |
| $TiO_2$ | 2,8 | 2,8 | 2,4 | 8,6 |
| $ZrO_2$ | - | - | 2,3 | - |
| $P_2O_5$ | - | - | 0,6 | - |
| $Fe_2O_3$ | - | - | 0,1 | 0,1 |
| CaO | - | - | - | 0,2 |
| $Na_2O$ | 0,5 | 0,5 | - | 0,1 |
| $K_2O$ | 0,1 | 0,1 | 0,3 | - |
| BaO | 1,6 | 1,6 | - | - |
| Cristaux | Spodumène | Spodumène | Virgilite | Indialite |
| Tg(°C) | 700 | 700 | 760 | 770 |
| Valeur de dilatation thermique à 700°C (%) | 0,1 | 0,1 | 0,1 | 0,26 |
| Taux de cristallisation (%) | 65 | 90 | 88 | 87 |

Préparation des pièces à tester

Les différents constituants particulaires, y compris le liant activable à chaud, sont introduits dans un malaxeur, et mélangés à sec pendant 5 minutes.

Les différents constituants particulaires utilisés sont les suivants :

- du corindon blanc présentant une teneur en alumine supérieure à 99,6%, et une densité sur grains égale à 3,95 g/cm$^3$ ;

- du corindon brun, présentant une teneur en alumine supérieure à 95%, une teneur en silice inférieure à 1,2%, une teneur en oxyde de titane inférieure à 3%, une teneur en oxyde de fer inférieure à 0,25%, et une densité sur grains supérieure à 3,85 g/cm$^3$ ;

- de l'alumine calcinée AC44B6 commercialisée par RIOTINTO ALCAN ;

- de l'argile, présentant une teneur en alumine égale à 28% sur produit sec, un percentile $D_{90}$ égal à 40 $\mu$m et une perte au feu mesurée après traitement thermique à 1000°C pendant 1 heure égale à 9%,

- de l'acide borique, présentant un équivalent $H_3BO_3$ supérieur à 99,9% et une taille médiane $D_{50}$ égale à 100 $\mu$m ;

- du fluoroborate de potassium ($KBF_4$), contenant typiquement 96% en masse de fluoroborate de potassium, et de taille inférieure à 100 $\mu$m.

Chaque poudre ainsi obtenue est introduite dans un malaxeur dans lequel on ajoute également 1% de poudre de dextrine, ce pourcentage étant par rapport à la masse de ladite poudre. Après 5 minutes de mélange, on ajoute progressivement 3% d'eau, en pourcentage par rapport à la masse de la poudre initiale (donc hors poudre de dextrine), sans arrêter le malaxeur. Après introduction de toute l'eau, le malaxage est poursuivi pendant 5 minutes.

L'ajout d'un liant temporaire comme la dextrine et de l'eau sont nécessaires pour la fabrication de petits échantillons, mais pas lors d'une application industrielle de la poudre pour former un revêtement d'un four.

Les mélanges humides sont alors versés dans des moules appropriés pour la fabrication des pièces suivantes :

- une brique consolidée de dimensions 230x114x60 mm$^3$ utilisée pour usiner des barreaux de dimensions 150 x 25 x 25 mm$^3$ ne comportant aucune face de peau et destinés aux caractérisations physico-mécaniques (masse volumique apparente, porosité ouverte, perte relative de résistance à la flexion suite à un choc thermique),
- un cylindre de diamètre 50 mm et de hauteur 60 mm percé en son centre d'un trou de diamètre 12 mm, destiné aux mesures de dilatation thermique,
- une brique consolidée de dimensions 230x114x60 mm$^3$ comportant 2 trous de diamètre 35 mm et profondeur 30 mm, destinée aux essais d'infiltration par les métaux en fusion.

A cet effet, le mélange humide versé dans les moules subit un pressage uniaxial, à une pression de 90 MPa. Les préformes ainsi obtenues sont démoulées puis séchées pendant 24 heures à 110°C.

Le cylindre destiné aux mesures de dilatation thermique n'est pas traité thermiquement.

Les briques sont consolidées dans le cycle thermique suivant :

- de 20°C à 750°C : montée à 150°C/h
- palier de 2 heures à 750°C
- descente à 150°C/h jusqu'à 20°C.

Caractérisation

Les fractions granulométriques des poudres sont déterminées par tamisage à sec pour les grades de $D_{10} >$ 45 $\mu$m et à l'aide d'un granulomètre laser HORIBA pour les grades de $D_{90} < 100$ $\mu$m.

L'analyse chimique est déterminée par spectroscopie de fluorescence X pour les éléments dont la teneur est supérieure à 0,1% massique. Si la teneur en un élément est inférieure à 0,1% massique, elle est déterminée par ICP (Induction Coupled Plasma), sur un modèle Vista AX (commercialisé par la société Varian).

Les mesures de la masse volumique apparente et de la porosité ouverte après traitement thermique de consolidation sont effectuées selon la méthode suivante : les barreaux mentionnés ci-dessus sont d'abord pesés secs pour déterminer leur masse sèche Ms. Ils sont ensuite placés dans une cloche sous vide d'air pendant 30 minutes. On remplit ensuite la cloche d'eau, de manière à ce que les barreaux soient totalement immergés. Après immersion, on maintient le vide pendant 30 minutes. On rétablit ensuite la pression atmosphérique dans la cloche et on laisse reposer à nouveau pendant 30 minutes. Les échantillons sont ensuite soumis à une pesée hydrostatique, donnant une masse Mi. Ils sont ensuite essuyés avec un chiffon humide et on mesure leur masse humide Mh.

La masse volumique apparente est donnée par le rapport p.Ms/(Mh-Mi), en g/cm$^3$, avec p étant la masse volumique de l'eau, prise égale à 1 g/cm$^3$.

La porosité ouverte est donnée par la rapport 100(Mh-Ms)/(Mh-Mi), en %.

La résistance à l'infiltration par les métaux en fusion est déterminée en mettant la brique consolidée percée de deux trous en contact avec un métal en fusion. A cet effet, les trous sont remplis de copeaux d'un alliage aluminium-silicium référence 42220 selon la norme NF EN 1706. Le tout est ensuite porté à une température de 800°C pendant un temps de palier limité à 8 heures. Après refroidissement, on mesure la profondeur d'infiltration.

La perte relative de résistance à la flexion suite à un choc thermique permet d'évaluer la capacité d'un produit à subir un tel choc.

L'essai normalisé PRE III.26/PRE/R.5.1/78 est utilisé pour déterminer le comportement aux chocs thermiques par la perte relative de résistance à la flexion (% Perte MOR) après un cycle consistant à placer une éprouvette d'essai à une température de 600°C, à maintenir l'éprouvette à cette température pendant 1 heure, puis à plonger l'éprouvette dans de l'eau froide (20°C).

Les éprouvettes sont des barreaux tels que décrits ci-dessus étuvés à 110°C pendant 48 heures avant réalisation de l'essai.

La résistance à la flexion est mesurée suivant la norme ISO 5014, avec un entraxe de 125 mm. Pour une composition donnée, la mesure de la résistance à la flexion initiale des éprouvettes (non soumises à un choc thermique), ou « MOR initial », est la valeur moyenne mesurée sur 3 éprouvettes identiques ; la mesure de la résistance après le choc thermique à 600°C, « MOR après CT » est la valeur moyenne de la résistance à la flexion mesurée à température ambiante sur les 3 éprouvettes après qu'elles ont subi ledit choc thermique ; la mesure de la perte relative de résistance à la flexion, «% Perte MOR » est donnée par la formule suivante :

$$\% \text{ Perte MOR} = 100.(\text{MOR après CT} - \text{MOR initial}) / (\text{MOR initial})$$

Le taux de cristallisation de la vitrocéramique est mesuré par diffraction des rayons X. Les diagrammes de diffraction X sont acquis avec un diffractomètre D5000, avec anticathode en cuivre, de la société Bruker. L'acquisition est réalisée sur un domaine angulaire 2θ compris entre 5° et 80°, avec un pas de 0,02° et un temps de 1s/pas. Une fente de réception de 0,6 mm est utilisée et l'échantillon est en rotation sur lui-même afin de limiter les effets d'orientations préférentielles. Le temps d'acquisition est multiplié par 2 afin d'obtenir une meilleure statistique de comptage.

La nature des phases cristallisées présentes est déterminée avec le logiciel EVA et la base de données des fiches ICDD.

Le pourcentage de phases amorphes est mesuré avec le logiciel High Score Plus fourni par la société PANalytycal. La méthode utilise l'affinement Rietveld en ajoutant dans l'échantillon un pourcentage connu d'un étalon cristallisé standard, en l'occurrence l'oxyde de zinc ZnO. L'échantillon est une pastille obtenue par mélange, dans un mortier en agate, de 0,4 g (soit 20 % en masse) de ZnO de pureté supérieure à 99% en masse et de taille inférieure à 1 μm et de 1,6 g (soit 80% en masse) du matériau vitrocéramique broyé à une taille inférieure à 40 μm.

Les phases amorphes ne sont pas visibles avec la méthode Rietveld, seules les phases cristallisées sont prises en compte et leur somme est normalisée à 100%.

Dans le cas où au moins une phase amorphe est aussi présente, la quantité de phases cristallisées doit être corrigée : L'ajout d'une quantité connue de l'étalon cristallisé permet d'effectuer une correction de la quantité de toutes les phases cristallisées présentes, et permet ainsi la détermination du pourcentage de phases amorphes présentes, %CompAm.

Le taux de cristallisation est donné par la formule suivante : 100 - %CompAm, en pourcentage en masse.

La mesure de la valeur de dilatation du tableau 2 est effectuée sur les cylindres non consolidés de diamètre 50 mm traversés d'un trou central de diamètre 12 mm, obtenus directement par pressage et séchés pendant 24 heures à 110°C. Cette mesure s'effectue selon la norme EN993-19. La mesure est réalisée par un capteur LVDT de marque RDP modèle DCT 500A, avec un comparateur en alumine frittée dense.

Résultats

Le tableau 2 suivant résume les résultats obtenus.

Tableau 2

| Exemple : | | 1 | 2 | 3 | 4 | 5 | 6 | 7 | 8 |
|---|---|---|---|---|---|---|---|---|---|
| Composition (pourcentages massiques sur la base de la poudre) | | | | | | | | | |
| Granulat | | | | | | | | | |
| Grains vitrocéramiques | ≤ 5 mm | - | 71 | 42 | 39 | 76 | 44,5 | 62 | 42 |
| Grains corindon blanc | ≤ 1 mm | 20 | - | 28 | 28,5 | - | 24 | 11 | 26 |
| Grains corindon brun | ≤ 1 mm | 14 | - | - | - | - | - | - | - |
| Grains corindon brun | 1 à 5 mm | 40 | - | - | - | - | - | - | - |
| *Total grains réfractaires* | | *74* | *0* | *28* | *28,5* | *0* | *24* | *11* | *26* |
| *Total granulat* | | *74* | *71* | *70* | *67,5* | *76* | *68,5* | *73* | *68* |
| *Quantité de grains vitrocéramiques présentant une taille supérieure à 1 mm, en pourcentages sur la base de la quantité de grains vitrocéramiques* | | *0* | *50,4* | *70* | *77* | *50,5* | *67* | *54* | *73* |
| Matrice | | | | | | | | | |
| Particules fines corindon blanc | | 14 | - | 18 | 22 | - | 21 | 14,5 | 20 |
| Particules fines corindon brun | | 2 | - | - | - | - | - | - | - |
| Particules fines alumine calcinée | 0 à 50 μm | 2 | 3 | 2,5 | 2,5 | 3,5 | 2,5 | 3 | 3 |
| Particules fines vitrocéramiques | | - | 14,5 | 1 | 1 | 15 | 1 | 4 | 2 |
| *Total particules fines réfractaires et vitrocéramiques* | | *18* | *17,5* | *21,5* | *25,5* | *18,5* | *24,5* | *21,5* | *25* |
| Argile | | 5 | 7 | 5,5 | 5,5 | 5 | 5,5 | 5 | 5,5 |
| Acide borique | | 2 | 3 | 2 | 1 | 0,3 | 1 | 0,3 | 1 |

(suite)

| Matrice | | | | | | | | |
|---|---|---|---|---|---|---|---|---|
| KBF4 : fluoroborate de potassium | 1 | 1,5 | 1 | 0,5 | 0,2 | 0,5 | 0,2 | 0,5 |
| *Quantité totale particules fines de liant* | *8* | *11,5* | *8,5* | *7* | *5,5* | *7* | *5,5* | *7* |
| *Total matrice* | *26* | *29* | *30* | *32,5* | *25* | *31,5* | *25,5* | *32* |
| Propriétés du produit consolidé | | | | | | | | |
| Masse volumique apparente (g/cm$^3$) | 3,07 | 2,09 | 2,44 | 2,53 | 2,12 | 2,52 | 2,31 | 2,55 |
| Porosité ouverte (%) | 18,5 | 15,7 | 19,2 | 17,8 | 18,7 | 18,3 | 19,0 | 18,0 |
| Valeur de dilatation thermique à 700°C (%) | 0,65 | 0 | 0,15 | 0,26 | -0,05 | 0,20 | 0,05 | 0,29 |
| % Perte MOR (%) | 46 | - | 15 | 32 | 0 | 13 | 7 | 30 |
| Profondeur d'infiltration du métal (mm) | 0 | 6 | 0 | - | - | 0 | 0 | - |

Les inventeurs considèrent que les résultats sont particulièrement satisfaisants s'ils satisfont le compromis suivant :

(a) La profondeur d'infiltration du métal est inférieure ou égale à 1 mm, de préférence nulle;

(b) La perte MOR suite au choc thermique est inférieure ou égale à 30%.

Par ailleurs, les inventeurs considèrent que, pour éviter la fissuration, il est indispensable que la valeur de dilatation mesurée à 700°C du produit reste positive.

Comme cela apparaît clairement à présent, l'invention fournit une poudre permettant de fabriquer des produits consolidés présentant une bonne résistance aux chocs thermiques et une bonne résistance à l'infiltration par les métaux en fusion.

Par ailleurs, d'autres essais ont montré qu'une poudre selon l'invention est facile à mettre en place, d'un coût faible et qu'elle conduit à un produit consolidé présentant une bonne inertie chimique vis-à-vis des métaux en fusion, capable de résister efficacement à la corrosion par ces métaux en fusion. Un produit consolidé selon l'invention est donc parfaitement adapté à une application à un four de fusion de métaux.

Bien entendu, l'invention n'est pas limitée aux modes de réalisation fournis à titre d'exemples.

## Revendications

1. Poudre comportant plus de 70% de particules vitrocéramiques et/ou réfractaires, une particule de ladite poudre étant classée dans la fraction appelée "matrice" ou dans la fraction appelée "granulat" selon qu'elle présente une taille inférieure ou égale à 100 μm, ou supérieure à 100 μm, respectivement,
le granulat, représentant plus de 60% de la poudre, comportant :

   - plus de 40% de particules en un matériau vitrocéramique présentant un taux de cristallisation supérieur à 50% et une valeur de dilatation thermique mesurée à 700°C inférieure à 0,3%, dites « grains vitrocéramiques » le matériau vitrocéramique étant un composé microcristallin obtenu par cristallisation contrôlée d'un verre précurseur, le matériau vitrocéramique étant composé de très fines cristallisations, de taille moyenne inférieure à 1μm, baignant dans une phase vitreuse résiduelle ;
   - moins de 35% de particules en un matériau réfractaire différent d'un matériau vitrocéramique, dites "grains réfractaires", la quantité de grains réfractaires étant supérieure à 10% si le granulat comporte plus de 40% de grains vitrocéramiques présentant une valeur de dilatation thermique mesurée à 700°C inférieure ou égale à 0,15% ;

   la matrice, représentant plus de 10% de la poudre, comportant :

   - moins de 30% de particules en un matériau réfractaire différent d'un matériau vitrocéramique, dites "particules fines réfractaires", la quantité de particules fines réfractaires étant supérieure à 5% et, de préférence, inférieure à 25%, si la quantité de grains vitrocéramiques présentant un taux de cristallisation inférieur à 75% est supérieure à 5% ;
- entre 0,1% et 18% de particules d'un liant activable à chaud, dites "particules fines de liant activable à chaud";

tous les pourcentages étant en masse par rapport à la masse de la poudre.

2. Poudre selon la revendication précédente, dans laquelle le liant activable à chaud est un liant inorganique et/ou au moins une résine.

3. Poudre selon la revendication précédente, comportant plus de 40% de grains vitrocéramiques présentant un taux de cristallisation supérieur à 75%.

4. Poudre selon l'une quelconque des revendications précédentes, dans laquelle la quantité de grains vitrocéramiques est supérieure à 50% et inférieure à 65% et/ou
dans laquelle la quantité de grains vitrocéramiques présentant une taille supérieure à 1 mm, sur la base de la quantité de grains vitrocéramiques, est supérieure à 40%.

5. Poudre selon l'une quelconque des revendications précédentes, dans laquelle le matériau vitrocéramique desdits grains vitrocéramiques présente des cristaux de virgilite et/ou de spodumène et/ou d'indialite et/ou de cordiérite et/ou de beta-quartz et/ou de mullite et/ou de celsian et/ou d'hexa-celsian.

6. Poudre selon l'une quelconque des revendications précédentes, dans laquelle le matériau vitrocéramique desdits grains vitrocéramiques présente une température de transition vitreuse supérieure à 700°C.

7. Poudre selon l'une quelconque des revendications précédentes, dans laquelle la matrice comporte moins de 20% de particules en un matériau vitrocéramique présentant un taux de cristallisation supérieur à 50% et une valeur de dilatation thermique mesurée à 700°C inférieure à 0,3%, dites « particules fines vitrocéramiques ».

8. Poudre selon l'une quelconque des revendications précédentes, dans laquelle les grains réfractaires et/ou les particules fines réfractaires sont en un matériau choisi dans le groupe formé par l'alumine, la magnésie, l'oxyde de chrome, la silice, la bauxite, la mullite, la zircone, la zircone partiellement stabilisée, la zircone stabilisée, la mullite-zircone, l'alumine-zircone, le spinelle magnésie-alumine, le zircon, la cordiérite, le titanate d'aluminium, les chamottes argileuses contenant entre 30 et 50% d'alumine, de préférence entre 35% et 45% d'alumine, la wollastonite, les matériaux alumine-zircone-silice (ou « AZS »), les matériaux alumine-zircone-silice-oxyde de chrome (ou « AZS-Cr »), la bauxite, les zircones renforcées par de l'alumine, les matériaux alumine-oxyde de titane-zircone, et leurs mélanges.

9. Poudre selon l'une quelconque des revendications précédentes, dans laquelle la quantité de particules fines réfractaires est inférieure à 25%.

10. Poudre selon l'une quelconque des revendications précédentes, dans laquelle le liant activable à chaud est sélectionné dans le groupe formé par l'oxyde de bore, l'acide borique, les borates, la cryolithe, les sels de fluorure, les composés de silicate, les composés de phosphate, les feldspaths, les chlorures de magnésium, la colémanite, l'argile, le kaolin, la silice amorphe, en particulier la fumée de silice, les résines phénoliques, les résines furaniques, les frittes céramiques, et leurs mélanges.

11. Poudre selon l'une quelconque des revendications précédentes, dans laquelle la quantité de particules de liant activable à chaud dans la matrice est supérieure à 3% et inférieure à 10%.

12. Poudre selon l'une quelconque des revendications précédentes, dans laquelle le liant activable à chaud présente une température de fusion comprise entre 150°C et 1200°C.

13. Poudre selon l'une quelconque des revendications précédentes, dans laquelle la quantité de particules fines réfractaires est supérieure à 5% et la quantité de grains vitrocéramiques ne comportant pas des cristaux de virgilite et/ou de spodumène et/ou d'indialite et/ou de cordiérite et/ou de béta-quartz et/ou de mullite et/ou de celsian et/ou d'hexa-celsian est supérieure à 5%.

14. Poudre selon l'une quelconque des revendications précédentes, ne comportant ni liant hydraulique ni liant organique excepté, éventuellement, une résine.

15. Poudre selon l'une quelconque des revendications précédentes, dans laquelle

    - la taille maximale des particules est inférieure à 5 mm, et
    - la quantité de particules de taille supérieure à 300 $\mu$m est supérieure à 50% et inférieure à 70%, et
    - la quantité de matrice est supérieure à 15% et inférieure à 40%, et
    - la quantité de particules de taille inférieure à 75 $\mu$m est supérieure à 10% et inférieure à 35%.

16. Mélange comportant une poudre selon l'une quelconque des revendications précédentes et

    - d'un liant temporaire en une quantité supérieure à 0,5% et inférieure à 6%, et/ou
    - de l'eau en une quantité d'eau supérieure à 2% et inférieure à 6%,

    en pourcentages en masse par rapport à la masse de la poudre avant addition du liant temporaire et de l'eau.

17. Produit consolidé obtenu par traitement thermique de consolidation à une température supérieure à la température de fusion du liant activable à chaud d'une poudre selon l'une quelconque des revendications là 13 ou d'un mélange selon la revendication précédente, le liant activable à chaud formant une phase liante entre les particules réfractaires et vitrocéramiques, après refroidissement.

18. Four de fusion de métaux comportant au moins une région destinée à être en contact avec un métal en fusion, ladite région étant constituée en un produit consolidé selon la revendication précédente.

**Patentansprüche**

1. Pulver enthaltend mehr als 70% an glaskeramischen und/oder feuerfesten Teilchen, wobei ein Teilchen des besagten Pulvers in der als "Matrix" bezeichneten Fraktion oder in der als "Granulat" bezeichneten Fraktion eingestuft ist, je nachdem ob es eine Größe von geringer als oder gleich 100 $\mu$m, oder mehr als 100 $\mu$m aufweist, entsprechend, wobei das Granulat, das mehr als 60% des Pulvers darstellt, enthält:

    - Mehr als 40% an Teilchen aus einem glaskeramischen Material welches einen Kristallisationsgrad von größer als 50% und einen Wert an Wärmeausdehnung gemessen bei 700 °C von geringer als 0,3% aufweist, genannt "glaskeramische Körner", wobei das glaskeramische Material eine mikrokristalline Verbindung ist, erhalten durch kontrollierte Kristallisation eines Glas-Vorläufers, wobei das glaskeramische Material aus sehr feinen Kristallisationen besteht, mit einer mittleren Größe von geringer als 1$\mu$m, welche in einer residualen Glasphase schwimmen;
    - Weniger als 35% an Teilchen aus einem feuerfesten Material, welches sich von einem glaskeramischen Material unterscheidet, genannt "feuerfeste Körner", wobei die Menge der feuerfesten Körner größer ist als 10% wenn das Granulat mehr als 40% an glaskeramischen Körnern enthält die einen Wert an Wärmeausdehnung gemessen bei 700 °C von geringer als oder gleich 0,15% aufweisen;

    wobei die Matrix, welche mehr als 10% des Pulvers darstellt, enthält:

    - Weniger als 30% an Teilchen aus einem feuerfesten Material, welches sich von einem glaskeramischen Material unterscheidet, genannt "feine feuerfeste Teilchen", wobei die Menge der feinen feuerfesten Teilchen größer ist als 5% und, vorzugsweise, geringer als 25%, wenn die Menge der glaskeramischen Körner welche einen Kristallisationsgrad von geringer als 75% aufweisen, größer als 5% ist;
    - Zwischen 0,1% und 18% an Teilchen eines hitzeaktivierbaren Bindemittels, genannt "feine Teilchen aus hitzeaktivierbarem Bindemittel"

    wobei alle Prozentangaben in Masse bezogen auf die Masse des Pulvers sind.

2. Pulver nach dem vorhergehenden Anspruch, wobei das hitzeaktivierbare Bindemittel ein anorganisches Bindemittel und/oder mindestens ein Harz ist.

3. Pulver nach dem vorhergehenden Anspruch, enthaltend mehr als 40% an glaskeramischen Körnern welche einen Kristallisationsgrad von größer als 75% aufweisen.

4. Pulver nach einem der vorhergehenden Ansprüche, wobei die Menge an glaskeramischen Körnern größer ist als 50% und geringer ist als 65% und/oder
Wobei die Menge an glaskeramischen Körnern, die eine Größe von größer als 1 mm aufweisen, auf der Basis der Menge an glaskeramischen Körnern, größer ist als 40%.

5. Pulver nach einem der vorhergehenden Ansprüche, wobei das glaskeramische Material der besagten glaskeramischen Körner Kristalle aus Virgilit und/oder aus Spodumen und/oder aus Indialit und/oder aus Cordierit und/oder aus Beta-Quartz und/oder aus Mullit und/oder aus Celsian und/oder aus Hexacelsian aufweist.

6. Pulver nach einem der vorhergehenden Ansprüche, wobei das glaskeramische Material der besagten glaskeramischen Körner eine Glasübergangstemperatur von größer als 700°C aufweist.

7. Pulver nach einem der vorhergehenden Ansprüche, wobei die Matrix weniger als 20% an Teilchen aus einem glaskeramischen Material aufweisen welche einen Kristallisationsgrad von größer als 50% und einen Wert an Wärmeausdehnung gemessen bei 700 °C von geringer als 0,3% aufweisen, genannt "feine glaskeramische Teilchen".

8. Pulver nach einem der vorhergehenden Ansprüche, wobei die feuerfesten Körner und/oder die feinen feuerfesten Teilchen aus einem Material sind ausgewählt aus der Gruppe gebildet aus Aluminiumoxid, Magnesia, Chromoxid, Siliziumdioxid, Bauxit, Mullit, Zirkonoxid, partiell stabilisiertes Zirkonoxid, stabilisiertes Zirkonoxid, Mullit-Zirkonoxid, Aluminiumoxid-Zirkonoxid, Magnesiumoxid-Aluminiumoxid Spinell, Zirkon, Cordierit, Aluminiumtitanat, Ton-Schamott enthaltend zwischen 30 und 50% an Aluminiumoxid, vorzugsweise zwischen 35% und 45% an Aluminiumoxid, Wollastonit, Aluminiumoxid-Zirkonoxid-Siliziumoxid Materialien (oder "AZS"), Aluminiumoxid-Zirkonoxid-Siliziumoxid-Chromoxid Materialien (oder "AZS-Cr"), Bauxit, mit Aluminiumoxid verstärktes Zirkonoxid, Aluminiumoxid-Titanoxid-Zirkonoxid Materialien, und deren Mischungen.

9. Pulver nach einem der vorhergehenden Ansprüche, wobei die Menge an feinen feuerfesten Teilchen geringer als 25% ist.

10. Pulver nach einem der vorhergehenden Ansprüche, wobei das hitzeaktivierbare Bindemittel ausgewählt ist aus der Gruppe gebildet aus Boroxid, Borsäure, Borate, Kryolithe, Fluoridsalze, Silikatverbindungen, Phosphatverbindungen, Feldspathe, Magnesiumchloride, Colemanite, Ton, Kaolin, amorphes Siliziumdioxid, insbesondere pyrogenes Siliziumdioxid, Phenolharze, Furanharze, Sinterkeramiken, und deren Mischungen.

11. Pulver nach einem der vorhergehenden Ansprüche, wobei die Menge an Teilchen aus hitzeaktivierbarem Bindemittel in der Matrix größer als 3% und geringer als 10% ist.

12. Pulver nach einem der vorhergehenden Ansprüche, wobei das hitzeaktivierbare Bindemittel eine Schmelztemperatur zwischen 150°C und 1200°C einschließlich aufweist.

13. Pulver nach einem der vorhergehenden Ansprüche, wobei die Menge an feinen feuerfesten Teilchen größer als 5% ist und die Menge an glaskeramischen Körnern, die keine Kristalle aus Virgilit und/oder aus Spodumen und/oder aus Indialit und/oder aus Cordierit und/oder aus Beta-Quartz und/oder aus Mullit und/oder aus Celsian und/oder aus Hexacelsian enthalten, größer als 5% ist.

14. Pulver nach einem der vorhergehenden Ansprüche, enthaltend weder ein hydraulisches Bindemittel, noch ein organisches Bindemittel, ausgenommen, eventuell, ein Harz.

15. Pulver nach einem der vorhergehenden Ansprüche, wobei

- die maximale Größe der Teilchen geringer ist als 5 mm, und
- die Menge der Teilchen mit einer Größe von größer als 300 $\mu$m größer als 50% und geringer als 70% ist, und
- die Menge der Matrix größer als 15% und geringer als 40% ist, und
- die Menge der Teilchen mit einer Größe von geringer als 75 $\mu$m größer als 10% und geringer als 35% ist.

16. Mischung enthaltend ein Pulver nach einem der vorhergehenden Ansprüche und

- ein temporäres Bindemittel in einer Menge größer als 0,5% und geringer als 6%, und/oder
- Wasser in einer Menge von Wasser größer als 2% und geringer als 6%,

in Prozentangaben in Masse bezogen auf die Masse des Pulvers vor Zugabe des temporären Bindemittels und des Wassers.

17. Konsolidiertes Produkt erhalten durch Konsolidierungs-Hitzebehandlung bei einer Temperatur über der Schmelztemperatur des hitzeaktivierbaren Bindemittels eines Pulvers nach einem der vorhergehenden Ansprüche 1 bis 13 oder einer Mischung nach dem vorhergehenden Anspruch, wobei das hitzeaktivierbare Bindemittel eine bindende Phase zwischen den feuerfesten und glaskeramischen Teilchen bildet, nach Erkaltung.

18. Metallschmelzofen enthaltend mindestens einen Bereich bestimmt um mit geschmolzenem Metall in Kontakt zu sein, wobei der besagte Bereich aus einem konsolidierten Produkt nach dem vorhergehenden Anspruch gebildet ist.

**Claims**

1. A powder comprising more than 70% of glass-ceramic and/or refractory particles, a particle of said powder being classified in the "matrix" fraction or in the "aggregate" fraction depending on whether it has a size less than or equal to 100 $\mu$m, or greater than 100 $\mu$m, respectively,
   the aggregate, representing more than 60% of the powder, comprising:

   - more than 40% of particles of a glass-ceramic material having a degree of crystallization of greater than 50% and a thermal expansion value measured at 700°C of less than 0.3%, referred to as "glass-ceramic grains"; the glass-ceramic material being a microcrystalline compound obtained by controlled crystallization of a precursor glass, the glass-ceramic material being composed of very fine crystallizations, of average size of less than 1 $\mu$m, embedded in a residual glassy phase;
   - less than 35% of particles made of a refractory material different from a glass-ceramic material, referred to as "refractory grains", the amount of refractory grains being greater than 10% if the aggregate comprises more than 40% of glass-ceramic grains having a thermal expansion value measured at 700°C of less than or equal to 0.15%;

   the matrix, representing more than 10% of the powder, comprising:

   - less than 30% of particles made of a refractory material different from a glass-ceramic material, referred to as "fine refractory particles", the amount of fine refractory particles being greater than 5% and, preferably, less than 25%, if the amount of glass-ceramic grains having a degree of crystallization of less than 75% is greater than 5%;
   - between 0.1% and 18% of particles of a heat-activatable binder, referred to as "fine heat-activatable binder particles";

   all the percentages being by weight in relation to the weight of the powder.

2. The powder as claimed in the preceding claim, wherein the heat-activatable binder is an inorganic binder and/or at least one resin.

3. The powder as claimed in the preceding claim, comprising more than 40% of glass-ceramic grains having a degree of crystallization of greater than 75%.

4. The powder as claimed in anyone of the preceding claims, wherein the amount of glass-ceramic grains is greater than 50% and less than 65% and/or the amount of glass-ceramic grains having a size of greater than 1 mm, on the basis of the amount of glass-ceramic grains, is greater than 40%.

5. The powder as claimed in anyone of the preceding claims, wherein the glass-ceramic material of said glass-ceramic grains has crystals of virgilite and/or spodumene and/or indialite and/or cordierite and/or beta-quartz and/or mullite and/or celsian and/or hexa-celsian.

6. The powder as claimed in anyone of the preceding claims, wherein the glass-ceramic material of said glass-ceramic grains has a glass transition temperature of greater than 700°C.

7. The powder as claimed in anyone of the preceding claims, wherein the matrix comprises less than 20% of particles made of a glass-ceramic material having a degree of crystallization of greater than 50% and a thermal expansion value measured at 700°C of less than 0.3%, referred to as "fine glass-ceramic particles".

8. The powder as claimed in anyone of the preceding claims, wherein the refractory grains and/or the fine refractory particles are made of a material chosen from the group formed by alumina, magnesia, chromium oxide, silica, bauxite, mullite, zirconia, partially stabilized zirconia, stabilized zirconia, mullite-zirconia, alumina-zirconia, magnesia-alumina spinel, zircon, cordierite, aluminum titanate, argillaceous chamottes containing between 30% and 50% of alumina, preferably between 35% and 45% of alumina, wollastonite, alumina-zirconia-silica (or "AZS") materials, alumina-zirconia-silica-chromium oxide (or "AZS-Cr") materials, bauxite, alumina-reinforced zirconias, alumina-titanium oxide-zirconia materials, and mixtures thereof.

9. The powder as claimed in anyone of the preceding claims, wherein the amount of fine refractory particles is less than 25%.

10. The powder as claimed in anyone of the preceding claims, wherein the heat-activatable binder is selected from the group formed by boron oxide, boric acid, borates, cryolite, fluoride salts, silicate compounds, phosphate compounds, feldspars, magnesium chlorides, colemanite, clay, kaolin, amorphous silica, in particular fumed silica, phenolic resins, furan resins, ceramic frits, and mixtures thereof.

11. The powder as claimed in anyone of the preceding claims, wherein the amount of heat-activatable binder particles in the matrix is greater than 3% and less than 10%.

12. The powder as claimed in anyone of the preceding claims, wherein the heat-activatable binder has a melting point between 150°C and 1200°C.

13. The powder as claimed in anyone of the preceding claims, wherein the amount of fine refractory particles is greater than 5% and the amount of glass-ceramic grains not comprising crystals of virgilite and/or spodumene and/or indialite and/or cordierite and/or beta-quartz and/or mullite and/or celsian and/or hexa-celsian is greater than 5%.

14. The powder as claimed in anyone of the preceding claims, comprising neither hydraulic binder nor organic binder apart from, optionally, a resin.

15. The powder as claimed in anyone of the preceding claims, wherein

   - the maximum size of the particles is less than 5 mm, and
   - the amount of particles having a size greater than 300 $\mu$m is greater than 50% and less than 70%, and
   - the amount of matrix is greater than 15% and less than 40%, and
   - the amount of particles having a size of less than 75 $\mu$m is greater than 10% and less than 35%.

16. A mix comprising a powder as claimed in anyone of the preceding claims, and

   - a temporary binder in an amount of greater than 0.5% and less than 6%, and/or
   - water in an amount of water of greater than 2% and less than 6%,

   in percentages by weight relative to the weight of the powder before addition of the temporary binder and water.

17. A consolidated product obtained by consolidation heat treatment at a temperature above the melting point of the heat-activatable binder of a powder as claimed in anyone of the preceding claims or of a mix as claimed in the preceding claim, the heat-activatable binder forming a binding phase between the glass-ceramic and refractory particles, after cooling.

18. A furnace for melting metals comprising at least one region intended to be in contact with a metal being melted, said region being constituted of a consolidated product as claimed in the preceding claim.

## RÉFÉRENCES CITÉES DANS LA DESCRIPTION

**Documents brevets cités dans la description**

- EP 1224153 A
- US 2007203013 A
- US 2005255986 A
- US 4125409 A
- FR 2528824
- EP 0931780 A
- AU 457462
- EP 1810956 A
- JP 3183656 B

**Littérature non-brevet citée dans la description**

- **SAIKIA et al.** Spinel formation in coreless induction furnace linings. *Proceedings of the 4th International Symposium on Advances in Refractories for the Metallurgical Industries,* 2004, 827-840
- **G. ALIPRANDI.** Matériaux réfractaires et céramiques techniques (éléments de céramurgie et de technologie). 1979